# EUROPEAN PATENT SPECIFICATION

(11) **EP 3 269 556 B1**
(45) Date of publication and mention of the grant of the patent: **28.08.2019**
(21) Application number: 17179200.5
(22) Date of filing: 30.06.2017
(51) Int. Cl.: B41J 29/393

(54) **WIRELESS THERMAL PRINTHEAD SYSTEM AND METHOD**
SYSTEM UND VERFAHREN FÜR DRAHTLOSEN THERMODRUCKKOPF
SYSTÈME ET PROCÉDÉ DE TÊTE D'IMPRESSION THERMIQUE SANS FIL

(30) Priority: 14.07.2016 US 201615209795
(43) Date of publication of application: 17.01.2018
(73) Proprietor: Intermec Technologies Corporation, Fort Mill, SC 29707 (US)
(72) Inventor: LIU, Zhiyong, Morris Plains, NJ New Jersey 07950 (US); CHUA, Kian Kiat, Morris Plains, NJ New Jersey 07950 (US)
(74) Representative: Houghton, Mark Phillip

(56) References cited:
- EP-A1- 1 867 486
- WO-A1-2015/184098
- US-A1- 2013 257 930
- US-B1- 6 239 879

## Description

### FIELD OF THE INVENTION

The present invention relates to thermal imaging systems. In particular, the disclosed embodiments relate to systems and methods for receiving power and/or data wirelessly at a thermal printhead.

### BACKGROUND

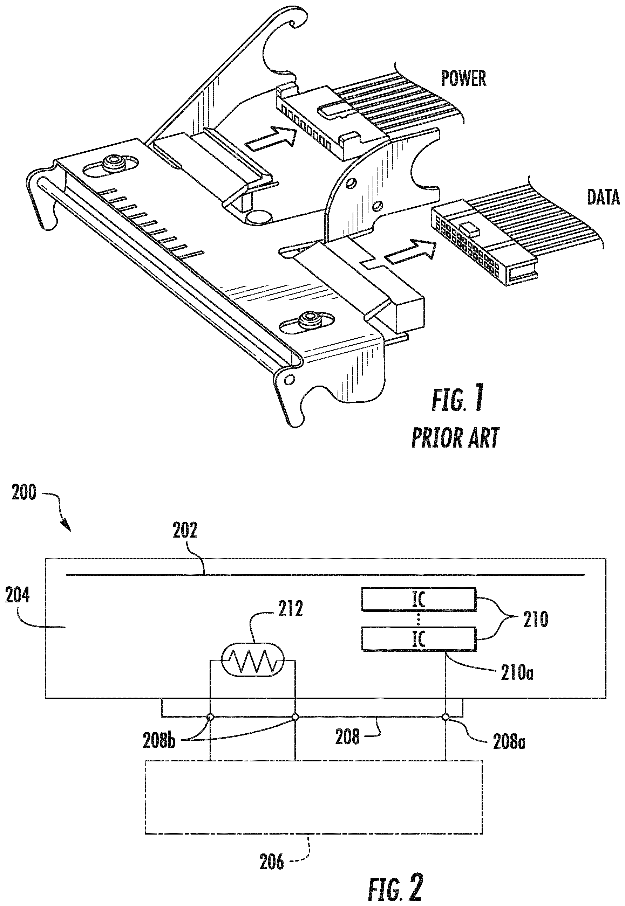

Generally speaking thermal printheads (TPHs) need a power cable to deliver power to operate. TPHs also typically combine the power cable with a data cable which functions as a data transfer between a computer processing unit (CPU) and TPH as shown in Fig. 1. Therefore, a need exists for a wireless TPH so that the printer can run without using a power cable or data cable.

EP1867486 discloses a thermal printhead which performs printing on a RFID tag as a print target that includes a coil antenna and a memory. The thermal printhead includes a coil antenna as a part of a data transmitter-receiver for the transmitting and receiving of data with respect to the RFID tag by wireless communication.

### SUMMARY

The invention is set out in accordance with the appended claims. Accordingly, in one aspect, the present invention embraces wirelessly transmitting power and/or data remotely to a thermal printhead.

In an exemplary embodiment, there is an imaging system for printing on a recordable medium comprising: a thermal printhead mounted on a platform and capable of printing on the recordable medium; and a power receiver coil housing mounted on the platform and capable of receiving wireless power.

In another exemplary embodiment, there is an imaging system for printing on a recordable medium comprising: a thermal printhead mounted on a platform and capable of printing on a movable recordable medium; and a data receiver housing having an antenna capable of receiving wireless signals to control the operation of the thermal printhead.

In yet another exemplary embodiment, there is provided a method of receiving wireless power for operation of a thermal printhead comprising: receiving power wirelessly at a power receiving coil in a power receiver coil housing from an alternating magnetic field; and providing direct current power from the power receiver coil housing to a thermal printhead to enable printing on a recordable medium.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 schematically depicts a prior art current thermal printhead with data and power cables.
Figure 2 shows a schematic view of an example of a thermal printhead used in the embodiments disclosed herein.
Figures 3A and 3B schematically depict a thermal printhead powered by an inductive coil.
Figures 4A and 4B schematically depict a thermal printhead capable of wirelessly receiving data.
Figure 5 schematically depicts an alternative embodiment of the thermal printhead in which the inductive coil is contained in the same housing as the wireless data receiver.

### DETAILED DESCRIPTION

All TPHs need a power and data cables to deliver energy and data to the TPH to print as shown in Figure 1. The data cable in a thermal printer can be quite long and wide and for the case of an industrial thermal printer it can be close to 50 centimeters (cm). This causes at least two problems. First, a lot of space has to be designed to fit the cable in. Second, the signal to the TPH can be weak and interfered with by noises along the path. Similarly, a thermal printhead has a power cable, which drives the TPH to print at a specific speed and density. The power cable can also be up to 50 cm long for an industrial model thermal printer so certain space has to be kept to route the power cable as well. Due to these cables taking up space in the printer it can also be quite troublesome to change the TPH given the space constraints, especially for a printer with a small footprint. The TPH is also susceptible to external noise, which may interfere with the circuit along the cable path. With a wireless TPH, a printer can run without using a power or data cable. This has the benefit of shrinking the printer size, increasing durability as there is no more requirement to plug and unplug the power and/or data cable to the TPH, and improve TPH replacement and repair by saving TPH assembly space occupied in a thermal printer.

Figure 2 shows a schematic view of a thermal printhead for use in an imaging system (e.g., printer) that may be used in the embodiments of this disclosure. The illustrated thermal printhead 200 includes a heating resistor array 202, a substrate 204, a control section 206, a connector 208, a drive integrated circuit (IC) array 210, and a thermistor 212. The substrate 204 is made of an insulating material such as ceramic and is rectangular for example. The drive IC array 210 and thermistor 212 may be arranged on a printed circuit board or flex circuit that are mounted on substrate 204. The elongated heating resistor array 202 is also formed on substrate 204 and is connected with the thermal printer's control section 206 via a connector 208. The heating resistor 202 is also connected with a plurality of electrodes (not shown). These electrodes may be equally spaced along the heating resistor 202, allowing the divided portions (heating dots) of the heating resistor 202 to be energized selectively. The drive IC array 210 provides control over the printing operation through the selective power application to the heating resistor array 202 via the electrodes described above. The control section 206 sends signals necessary for performing the printing operation to drive IC array 210. These signals include, for example, a printing data signal, a clock signal, a latch signal and a strobe signal. The drive IC array 210 has a strobe signal terminal 210a, to which the strobe signal is sent via a strobe signal terminal 208a of the connector 208. The strobe signal determines a duration of time for the heating resistor 202 to be energized. While the strobe signal assumes HIGH level, the drive IC array 210 makes power available selectively to the heating resistor 202. The substrate 204 is provided with a thermistor 212. The thermistor 212 is connected with the thermal printer's control section 206 via a thermistor terminal 208b of the connector 208. The connector 208 establishes an electrical connection between the thermal printhead and the thermal printer. The control section 206 obtains information on the temperature of the substrate 204 based on a resistance value of the thermistor 212. If the thermistor 212 gives an extremely small resistance value (meaning that the substrate 204 is at an abnormally high temperature), the control section 206 may stop sending printing commands to the drive IC 210 in order to prevent the thermal printhead 200 from operating abnormally or being damaged.

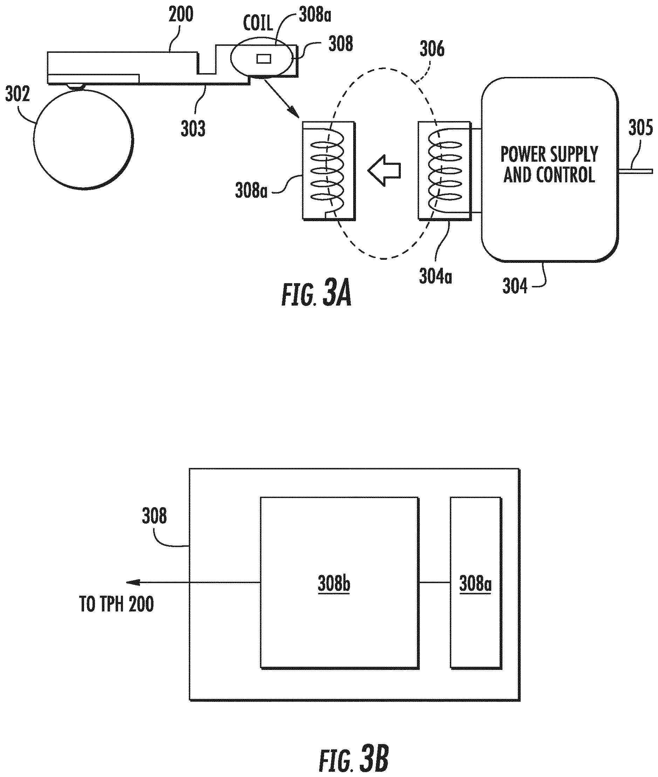

Figure 3A shows a wireless TPH powered by an inductive coil. In Figure 3A, TPH 200 is engaged with rotatably driven platen roller 302 which supports and guides a recording material (e.g., paper) (not shown) overlaid with a ribbon (also not shown). TPH 200 is mounted on platform 303. The speed of the drum 302 is timed to be slow enough to allow heat to penetrate the recording material, and fast enough so that the recording material doesn't overheat. The recording layer of the recording web material intimately contacts the ribbon, which is in turn in contact with TPH 200. Through this process, electricity heats the small elements which melts the wax (or resin) which comes off the ribbon and sticks to the recording web material. Instead of being powered by a cable, TPH 200 receives power from a proximate power supply and control 304. A direct current (DC) power source (e.g., Mains) 305 is converted into high frequency Alternating Current (AC) by transmitter electronics inside power supply and control housing 304 (also called a transmitting coil housing). The power supply and control housing provides a control function such as frequency at the power supply side. The high frequency AC flows into transmitting inductive coil (or inductive coils) 304a which generates an oscillating magnetic field which provides power across air gap 306. Energy from the magnetic field induces AC in the receiver coil 308a located in receiver coil housing 308 also mounted on platform 303. The power typically may operate in a range of approximately 400 to 500 Watts. The distance between the transmitter coil and receiver coil housing is up to approximately 200 millimeters. In general the distance should be minimized to maintain higher efficiency. Receiver coil housing 308 is shown in greater detail in block diagram form in Figure 3B. The wirelessly provided AC is converted back into DC by receiver electronics 308b in housing 308 and provided to the electronics of the TPH 200. Receiver electronics 308b may include a rectifier, filter, voltage regulator, capacitors and the like. By using inductive coils 304a, 308a at both the thermal printhead 200 and power supply 304, the energy can be transferred through electromagnetic field 306.

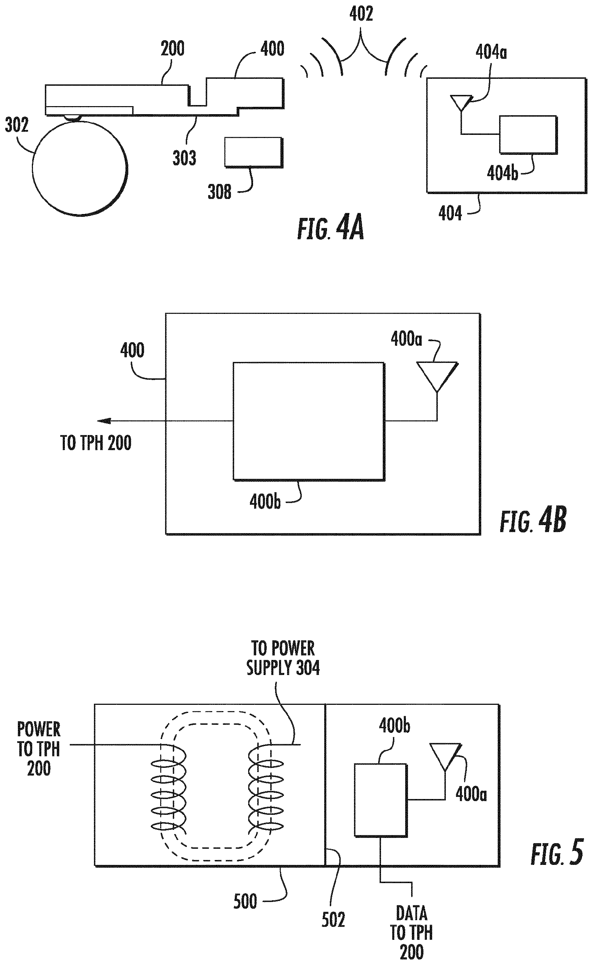

In an alternative embodiment illustrated by Figure 4A, a data receiver housing 400 may also be mounted on the platform 303 with TPH 200 and receiver coil housing 308. The housing 400 may be integrated with housing 308 or be in a separate housing. (In an alternative embodiment, the receiver coil housing 308 may be removed and the TPH 200 can receive its power through a standard power cable while the data is received wirelessly). As shown in Figure 4B, data receiver housing 400 contains a wireless antenna 400a capable of receiving wireless data transfer signal 402 sent from a transmitter/receiver 404 located proximate to the TPH 200. The data receiver housing 400 also contains electronic components 400b to process signal 402 and the electronic components may include an amplifier, detector, filter, oscillator and the like. Data receiver housing 400 is hardwired to thermal printhead 200 to provide data and control information. In an alternative embodiment, data receiver housing 400 also might contain a transmitter (i.e., a transceiver) to send wireless updates on the state of TPH 200 to transmitter/receiver 404. Transmitter/receiver 404 includes an antenna 404a and electronic components 404b capable of transmitting (and receiving) wireless signals. These electronic components may include an amplifier, detector, filter, oscillator and the like. Wireless signal 402 may be WiFi™, Bluetooth™, or any short-range or long-range over-the-air signal communication. Data received by the data receiver housing 400 may be commands for the TPH 200 and/or information to be printed on the recording material. The data sent by the housing 400 to transmitter/receiver 404 may include wireless authentication information to prevent a counterfeit thermal printhead from being used in the printer. In case a counterfeit printhead is being used, the transmitter/receiver 404 will stop forwarding data to housing 400 and the TPH 200.

Figure 5 illustrates an alternative embodiment having inductance coils 308a and associated electronics 308b combined with wireless data receiver antenna 400a and its associated electronics 400b in the same housing 500 and on the same platform 303. In this embodiment there would be electromagnetic shielding 502 located between the power electronics and the data electronics to minimize interference.

Advantages of the embodiments disclosed herein include the following. First, the disclosed embodiments save thermal printhead space in thermal printers and allow for the shrinking of the printer. Second, there will be no need to plug and unplug the TPH 200 so there is no connector wear and tear and thus increase durability. Third, it will also make a thermal printhead change a hassle free job and increase user convenience.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

Although process (or method) steps may be described or claimed in a particular sequential order, such processes may be configured to work in different orders. In other words, any sequence or order of steps that may be explicitly described or claimed does not necessarily indicate a requirement that the steps be performed in that order unless specifically indicated. Further, some steps may be performed simultaneously despite being described or implied as occurring non-simultaneously (e.g., because one step is described after the other step) unless specifically indicated. Where a process is described in an embodiment the process may operate without any user intervention.

## Claims

1. An imaging system for printing on a recordable medium comprising:
a thermal printhead (200) mounted on a platform (303) and capable of printing on the recordable medium; and
a power receiver coil (308a) located in a power receiving coil housing (308) which is mounted on the platform and capable of receiving wireless power for enabling printing on the recordable medium.

2. The imaging system of claim 1, wherein the power receiver coil housing includes a power receiver coil for inductively transferring power from an alternating magnetic field.

3. The imaging system of claim 2, further comprising:
a power transmitter coil housing capable of placing high frequency alternating current into a power transmitter coil to create the alternating magnetic field.

4. The imaging system of claim 1, further comprising:
a data receiver housing having a data receiver antenna capable of receiving wireless signals to control the operation of the thermal printhead.

5. The imaging system of claim 4, further comprising:
a data transmitter housing having an antenna capable of transmitting wireless signals to the data receiver housing.

6. The imaging system of claim 1, further comprising:
a data transceiver coupled to the thermal printhead and capable of transmitting and receiving wireless signals to report status conditions of the thermal printhead and control the operation of the thermal printhead.

7. The imaging system of claim 1, further comprising:
a data receiver antenna and data receiver electronics located in the power receiver coil housing and capable of receiving wireless signals to control the operation of the thermal printhead; and
an electromagnetic shield located between the power receiving coil and the data receiver antenna and the data receiver electronics in the power receiving coil housing.

8. The imaging system of claim 1, further comprising:
a data transceiver capable of transmitting and receiving wireless signals containing authentication information of the thermal printhead and control the operation of the thermal printhead

9. A method of receiving wireless power for operation of a thermal printhead comprising:
receiving power wirelessly at a power receiving coil in a power receiver coil housing from an alternating magnetic field; and
providing direct current power from the power receiver coil housing to a thermal printhead to enable printing on a recordable medium.

10. The method of claim 9, further comprising:
creating the alternating magnetic field at a power transmitter coil housing located proximate to the power receiver coil housing by placing high frequency alternating current into a power transmitter coil.

11. The method of claim 10 further comprising:
receiving wireless signals at a data receiver housing having a data receiver antenna which is coupled to the thermal printhead to control the operation of the thermal printhead.

12. The method of claim 11, further comprising:
transmitting wireless signals from a data transmitting housing having an antenna to the data receiver housing.

13. The method of claim 11, further comprising:
transmitting wireless signals from the data receiver housing containing authentication information of the thermal printhead.

14. The method of claim 9, further comprising:
receiving wireless signals at a data receiver housing having a data receiver antenna which is coupled to the thermal printhead to control the operation of the thermal printhead; and
shielding the power receiving coil and the data receiver antenna and the data receiver electronics in the power receiving coil housing.

## Patentansprüche

1. Bildgebungssystem zum Drucken auf einem aufzeichnungsfähigen Medium, Folgendes umfassend:
einen Thermodruckkopf (200), der auf einer Plattform (303) befestigt ist und zum Drucken auf dem aufzeichnungsfähigen Medium in der Lage ist; und
eine Stromempfängerspule (308a), die in einem Stromempfangsspulengehäuse (308) angeordnet ist, das auf der Plattform befestigt ist und zum Empfangen von Drahtlosstrom in der Lage ist, um Drucken auf dem aufzeichnungsfähigen Medium zu ermöglichen.

2. Bildgebungssystem nach Anspruch 1, wobei das Stromempfängerspulengehäuse eine Stromempfängerspule zum induktiven Übertragen von Strom aus einem magnetischen Wechselfeld umfasst.

3. Bildgebungssystem nach Anspruch 2, weiterhin Folgendes umfassend:
ein Stromsenderspulengehäuse, das zum Einbringen von Hochfrequenzwechselstrom in eine Stromsenderspule in der Lage ist, um das magnetische Wechselfeld zu erzeugen.

4. Bildgebungssystem nach Anspruch 1, weiterhin Folgendes umfassend:
ein Datenempfängergehäuse, das eine Datenempfängerantenne aufweist und das zum Empfangen von Drahtlossignalen in der Lage ist, um den Betrieb des Thermodruckkopfs zu steuern.

5. Bildgebungssystem nach Anspruch 4, weiterhin Folgendes umfassend:
ein Datensendergehäuse, das eine Antenne aufweist und das zum Senden von Drahtlossignalen an das Datenempfängergehäuse in der Lage ist.

6. Bildgebungssystem nach Anspruch 1, weiterhin Folgendes umfassend:
einen Datensendeempfänger, der mit dem Thermodruckkopf gekoppelt ist und zum Senden und Empfangen von Drahtlossignalen in der Lage ist, um Statuszustände des Thermodruckkopfs zu berichten und den Betrieb des Thermodruckkopfs zu steuern.

7. Bildgebungssystem nach Anspruch 1, weiterhin Folgendes umfassend:
eine Datenempfängerantenne und Datenempfängerelektronik, die in dem Stromempfängerspulengehäuse angeordnet sind und zum Empfangen von Drahtlossignalen in der Lage sind, um den Betrieb des Thermodruckkopfs zu steuern; und
eine elektromagnetische Abschirmung, die zwischen der Stromempfangsspule und der Datenempfängerantenne und der Datenempfängerelektronik in dem Stromempfangsspulengehäuse angeordnet ist.

8. Bildgebungssystem nach Anspruch 1, weiterhin Folgendes umfassend:
einen Datensendeempfänger, der zum Senden und Empfangen von Drahtlossignalen in der Lage ist, die Authentifizierungsinformationen des Thermodruckkopfs enthalten und den Betrieb des Thermodruckkopfs steuern.

9. Verfahren zum Empfangen von Drahtlosstrom zum Betrieb eines Thermodruckkopfs, Folgendes umfassend:
drahtloses Empfangen von Strom an einer Stromempfangsspule in einem Stromempfängerspulengehäuse aus einem magnetischen Wechselfeld; und
Bereitstellen von Gleichstrom aus dem Stromempfängerspulengehäuse an einen Thermodruckkopf, um Drucken auf einem aufzeichnungsfähigen Medium zu ermöglichen.

10. Verfahren nach Anspruch 9, weiterhin Folgendes umfassend:
Erzeugen des magnetischen Wechselfelds an einem Stromsenderspulengehäuse, das in der Nähe des Stromempfängerspulengehäuses angeordnet ist, durch Einbringen von Hochfrequenzwechselstrom in eine Stromsenderspule.

11. Verfahren nach Anspruch 10, weiterhin Folgendes umfassend:
Empfangen von Drahtlossignalen an einem Datenempfängergehäuse, das eine Datenempfängerantenne aufweist und das mit dem Thermodruckkopf gekoppelt ist, um den Betrieb des Thermodruckkopfs zu steuern.

12. Verfahren nach Anspruch 11, weiterhin Folgendes umfassend:
Senden von Drahtlossignalen aus einem Datensendegehäuse, das eine Antenne aufweist, an das Datenempfängergehäuse.

13. Verfahren nach Anspruch 11, weiterhin Folgendes umfassend:
Senden von Drahtlossignalen aus dem Datenempfängergehäuse, die Authentifizierungsinformationen des Thermodruckkopfs enthalten.

14. Verfahren nach Anspruch 9, weiterhin Folgendes umfassend:
Empfangen von Drahtlossignalen an einem Datenempfängergehäuse, das eine Datenempfängerantenne aufweist und das mit dem Thermodruckkopf gekoppelt ist, um den Betrieb des Thermodruckkopfs zu steuern; und
Abschirmen der Stromempfangsspule und der Datenempfängerantenne und der Datenempfängerelektronik in dem Stromempfangsspulengehäuse.

## Revendications

1. Système de formation d'image autorisant une impression sur un support enregistrable, comprenant :
une tête d'impression thermique (200) montée sur une plate-forme (303) et pouvant imprimer sur le support enregistrable, et
une bobine de récepteur de puissance (308a) située dans un logement de bobine de réception de puissance (308), lequel est monté sur la plate-forme et peut recevoir de l'énergie sans fil afin d'autoriser l'impression sur le support enregistrable.

2. Système de formation d'image selon la revendication 1, dans lequel la bobine de récepteur de puissance inclut une bobine de récepteur de puissance permettant de transférer par induction de l'énergie à partir d'un champ magnétique alternatif.

3. Système de formation d'image selon la revendication 2, comprenant en outre :
un logement de bobine d'émetteur de puissance pouvant injecter un courant alternatif haute fréquence dans une bobine d'émetteur de puissance afin de créer le champ magnétique alternatif.

4. Système de formation d'image selon la revendication 1, comprenant en outre :
un logement de récepteur de données comportant une antenne de récepteur de données pouvant recevoir des signaux sans fil afin de piloter le fonctionnement de la tête d'impression thermique.

5. Système de formation d'image selon la revendication 4, comprenant en outre :
un logement d'émetteur de données comportant une antenne pouvant transmettre des signaux sans fil au logement de récepteur de données.

6. Système de formation d'image selon la revendication 1, comprenant en outre :
un émetteur récepteur de données couplé à la tête d'impression thermique et pouvant transmettre et recevoir des signaux sans fil afin de signaler des conditions d'état de la tête d'impression thermique et de piloter le fonctionnement de la tête d'impression thermique.

7. Système de formation d'image selon la revendication 1, comprenant en outre :
une antenne de récepteur de données et des circuits électroniques récepteurs de données situés dans le logement de bobine de récepteur de puissance et pouvant recevoir des signaux sans fil pour piloter le fonctionnement de la tête d'impression thermique, et
un blindage électromagnétique situé entre la bobine de réception de puissance et l'antenne de récepteur de données et les circuits électroniques récepteurs situés dans le logement de bobine de réception de puissance.

8. Système de formation d'image selon la revendication 1, comprenant en outre :
un émetteur récepteur de données pouvant transmettre et recevoir des signaux sans fil contenant des informations d'authentification de la tête d'impression thermique et pouvant piloter le fonctionnement de la tête d'impression thermique.

9. Procédé de réception de puissance sans fil en vue de l'actionnement d'une tête d'impression thermique, comprenant :
la réception d'énergie sans fil au niveau d'une bobine de réception de puissance en provenance d'un champ magnétique alternatif dans un logement de bobine de récepteur de puissance, et
la délivrance d'une énergie en courant continu à une tête d'impression thermique à partir de la bobine de récepteur de puissance afin d'autoriser une impression sur un support enregistrable.

10. Procédé selon la revendication 9, comprenant en outre :
la création du champ magnétique alternatif au niveau d'une bobine d'émetteur de puissance située à proximité du logement de la bobine de récepteur de puissance en injectant un courant alternatif haute fréquence dans une bobine d'émetteur de puissance.

11. Procédé selon la revendication 10, comprenant en outre :
la réception de signaux sans fil au niveau du logement de récepteur de données comportant une antenne de récepteur de données qui est couplée à la tête d'impression thermique afin de piloter le fonctionnement de la tête d'impression thermique.

12. Procédé selon la revendication 11, comprenant en outre :
la transmission de signaux sans fil vers le logement de récepteur de données à partir d'un logement de transmission de données comportant une antenne.

13. Procédé selon la revendication 11, comprenant en outre :
la transmission de signaux sans fil à partir du logement de récepteur de données contenant des informations d'authentification de la tête d'impression thermique.

14. Procédé selon la revendication 9, comprenant en outre :
la réception de signaux sans fil au niveau d'un logement de récepteur de données comportant une antenne de récepteur de données qui est couplée à la tête d'impression thermique afin de piloter le fonctionnement de la tête d'impression thermique, et
le blindage de la bobine de réception de puissance et de l'antenne de récepteur de données et des circuits électroniques de récepteur de données dans le logement de bobine de réception de puissance.
